(19) **Europäisches Patentamt / European Patent Office / Office européen des brevets**

(11) **EP 2 381 603 A1**

(12) **EUROPEAN PATENT APPLICATION**
published in accordance with Art. 153(4) EPC

(43) Date of publication:
26.10.2011 Bulletin 2011/43

(51) Int Cl.:
*H04J 11/00* (2006.01)    *H04W 24/10* (2009.01)

(21) Application number: 10731187.0

(22) Date of filing: 06.01.2010

(86) International application number:
**PCT/JP2010/050062**

(87) International publication number:
**WO 2010/082518 (22.07.2010 Gazette 2010/29)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.01.2009 JP 2009005243**

(71) Applicant: **NTT DOCOMO, INC.**
**Chiyoda-ku**
**Tokyo 100-6150 (JP)**

(72) Inventors:
- **KITAO, Koshiro**
  **Tokyo 100-6150 (JP)**
- **IMAI, Tetsuro**
  **Tokyo 100-6150 (JP)**
- **SUZUKI, Mototsugu**
  **Tokyo 100-6150 (JP)**

(74) Representative: **HOFFMANN EITLE**
**Patent- und Rechtsanwälte**
**Arabellastraße 4**
**81925 München (DE)**

(54) **RADIO QUALITY DETERMINING APPARATUS AND METHOD**

(57)    A radio quality measurement apparatus extracts RS from a received signal on which FFT has been performed, and derives a FFT point number (N) of time samples to generate No division signals. The time window of N points includes $N_0$ division windows. Each division signal includes a series of time samples in a corresponding division window. The apparatus obtains a phase deviation amount ($\theta$) between subcarrier signal components in the division signal on which FFT has been performed, and an interference signal power (ISSI), so as to calculate SIR. A phase difference between the signal components is corrected by the phase deviation amount ($\theta$) depending on a position (n') of a delay path. SIR is calculated based on a first value $\lambda_1$ and a second value $\lambda_2$ that are respectively derived from ensemble mean of sum signal strength and difference signal strength ($|r_i \pm r_{i+1}/e^{j\theta}|^2$) of corrected two signal components.

FIG.5

104

**Description**

TECHNICAL FIELD

The present invention generally relates to a technical field of mobile communications. More particularly, the present invention relates to an apparatus and a method for measuring radio quality in a mobile communication system.

BACKGROUND ART

In a radio communication system, it is necessary to ascertain state of radio links in order to properly demodulate a received signal.

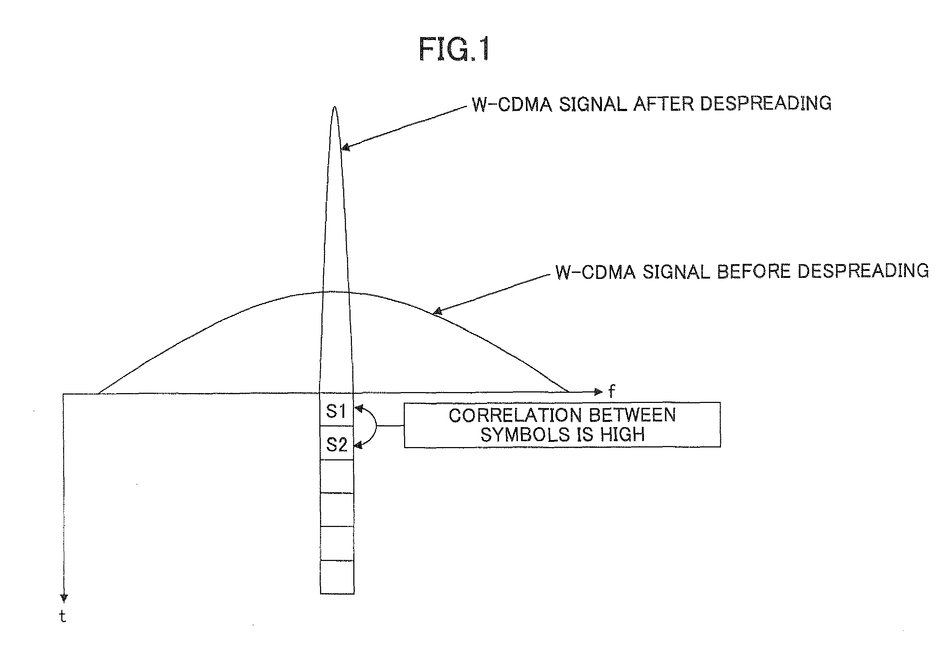

As shown in Fig. 1, in a mobile communication system of the W-CDMA (Wideband-Code Division Multiple Access) scheme, a receiving apparatus (a mobile station, for example) performs despreading processing on a spread signal transmitted from a base station, and calculates received powers of a downlink desired signal and an interference signal using a common pilot channel (CPICH).

In the mobile communication system of the W-CDMA scheme, received signals $r_n$ and $r_{n+1}$ of two pilot signals $S_n$ and $S_{n+1}$ transmitted in different timings are averaged using the following equations, so that the received powers of the desired signal and the interference signal in the downlink are calculated.

$$\lambda_1 = 1/2N_s \times \sum_1^{Ns} \left| r_n + r_{n+1} \right|^2 \quad \cdots (1)$$

$$\lambda_2 = 1/2N_s \times \sum_1^{Ns} \left| r_n - r_{n+1} \right|^2 \quad \cdots (2)$$

$$RSCP = 1/2 \times \left| \lambda_1 - \lambda_2 \right| \quad \cdots (3)$$

$$ISSI = \lambda_2 \quad \cdots (4)$$

In the equations, RSCP (Received signal code Power) indicates a received power of a desired signal, and ISSI (Interference Signal Strength Indicator) indicates a received power of an interference signal. Also, $r_n = \alpha S_n + I_n$ and $r_{n+1} = \beta S_{n+1} + I_{n+1}$ hold true, wherein $\alpha$ and $\beta$ indicate effects of fading for the transmission symbols respectively, and $I_n$ and $I_{n+1}$ indicate interference signal components including thermal noise of the symbols respectively. The effects of fading include amplitude variation and phase variation.

In the mobile communication system of the W-CDMA scheme, two pilot symbols $S_n$, $S_{n+1}$ that are continuously transmitted using a single frequency are used for calculating a received power in the downlink. In a time period during which channel variation between two pilot symbols is small, propagation paths can be regarded as almost the same. Thus, coefficients $\alpha$ and $\beta$ of variation of propagation paths by which $S_n$ and $S_{n+1}$ are multiplied respectively can be regarded to be almost the same. In this case, received powers of the desired signal and the interference signal can be estimated accurately using the equations. That is, when $\alpha S_n$ and $\beta S_{n+1}$ can be regarded to be almost the same, $\lambda_1$ represents a component in which the desired signal component and the interference signal component of the two symbols are added and averaged, and $\lambda_2$ represents an average value of interference components of two symbols. Thus, the desired signal component can be obtained by calculating $|\lambda_1 - \lambda_2|/2$.

Such a measurement method is described in IMAI Tetsuro, Mori Shinichi, "Delay Profile Measurement System using Common Pilot Channel for W-CDMA Cellular System", The transactions of the Institute of Electronics, Information and Communication Engineers. B J84-B(9), 1613-1624, Sept. 2001.

By the way, in the next-generation mobile communication system which becomes a successor of the system of the W-CDMA scheme, a radio access scheme different from the W-CDMA scheme is used. For example, in the Long Term Evolution (LTE) scheme, the Orthogonal Frequency Division Multiplexing (OFDM) scheme is used in downlink, and the Single-Carrier Frequency - Division Multiple Access (SC-FDMA) scheme or the DFT spread OFDM scheme is used.

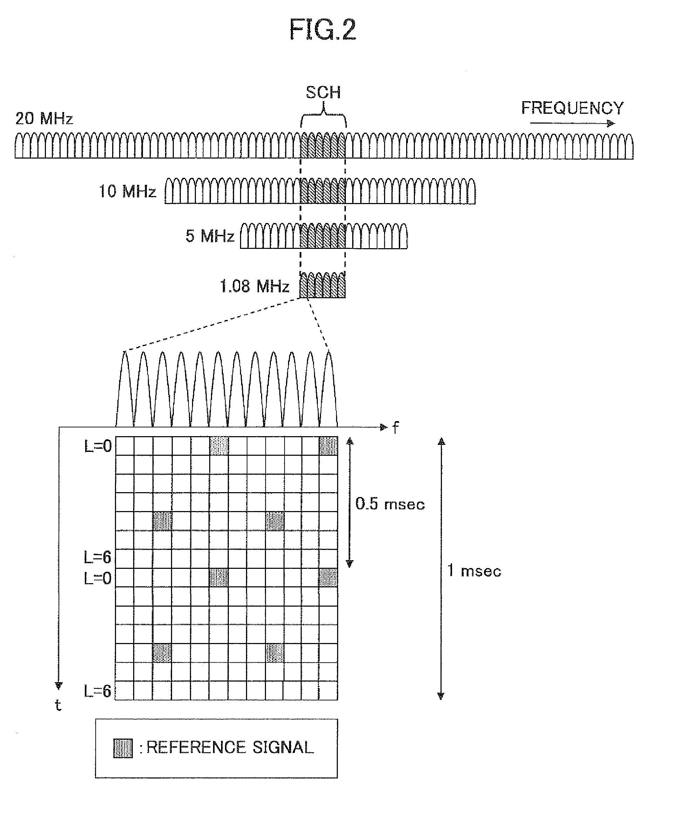

Fig. 2 schematically shows downlink radio resources in the LTE mobile communication system. The user apparatus performs radio communication using one or more resource blocks in any of bands of 1.08 ~ 20MHz. In any bandwidth, a synchronization channel (SCH) is mapped near the center of the band. The user apparatus captures the synchronization channel (SCH) and synchronizes to it so as to be able to perform communication after that.

In the example shown in the lower side of Fig. 2, two slots of 0.5 ms are included in a subframe of 1 ms, in which each slot consists of seven OFDM symbols (L=0~6). One resource block occupies 12 subcarriers (180 KHz). The reference signals (RS) are mapped so as to be distributed in time and frequency directions. The RS is mapped every 6 subcarriers in a particular OFDM symbol.

The reference signal is a known signal which is known in the transmission side and in the receiving side, and may be used synonymously with a pilot signal, a training signal and the like. Also, unless there is no fear of confusion, "signal" and "channel" can be used synonymously.

The above-mentioned transmission method of the reference signal is described in 3GPP TS36.211 v8.4.0 (2008-09), Sec.6.10 Reference Signal.

SUMMARY OF THE INVENTION

PROBLEM TO BE SOLVED BY THE INVENTION

As shown in Fig. 2, when pilot signals are transmitted discontinuously in the time direction and in the frequency direction, propagation paths between two pilot symbols arriving contiguously are not necessarily the same. Especially, when delay wave is outstanding in a multipath propagation environment and when moving speed is high, fading is remarkably different between the two pilot signals. In this case, "$\alpha$" cannot be regarded the same as "$\beta$", so that correlation between two received signals ($r_n$ and $r_{n+1}$) becomes small. Thus, the interference signal component cannot be properly calculated using the above-mentioned equations (especially, equation (2)), so that deterioration of estimation accuracy of reception quality is concerned.

An object of the present invention is to accurately estimate reception quality of pilot signals even when the pilot signals are mapped discontinuously in the time direction and in the frequency direction.

MEANS FOR SOLVING THE PROBLEM

A radio quality measurement apparatus of an embodiment of the present invention includes:

an extraction unit (1044, 1046) configured to extract pilot signals from a received signal on which Fourier transform has been performed, and to derive a FFT point number (N) of time samples from the extracted pilot signals;
a dividing unit (1048) configured to generate a plurality of ($N_0$) division signals from the FFT point number of time samples, wherein a time window including the FFT point number of time samples includes a plurality of division windows, and each of the plurality of division signals includes a series of time samples in a corresponding division window;
a transform unit (1052) configured to perform Fourier transform on each of the plurality of division signals;
a quality calculation unit (1054) configured to obtain a phase deviation amount ($\theta$) between subcarrier signal components in the division signal on which Fourier transform has been performed, and an interference signal power (ISSI) per division window, so as to calculate a reception quality (SIR) of the pilot signals,
wherein the phase deviation amount ($\theta$) is derived according to a time sample position ($n'$) of a delay path of the pilot signals,
a phase difference between the subcarrier signal components is corrected by the phase deviation amount ($\theta$), and
the interference signal power (ISSI) and the reception quality (SIR) are calculated based on a first value $\lambda_1$ and a second value $\lambda_2$ that are respectively derived from ensemble mean of sum signal strength and difference signal strength ($|r_i \pm r_{i+1}/e^{j\theta}|^2$) of corrected two subcarrier signal components -

EFFECT OF THE PRESENT INVENTION

According to an embodiment of the present invention, reception quality of pilot signals can be accurately estimated even when the pilot signals are mapped discontinuously in the time direction and in the frequency direction.

BRIEF DESCRIPTION OF THE DRAWINGS

Fig. 1 is a diagram showing signals before and after despreading in a mobile communication system of the W-CDMA scheme;
Fig. 2 is a diagram showing radio resources in a mobile communication system of the LTE scheme;
Fig. 3 is a diagram showing an outline of the mobile communication system;
Fig. 4 is a schematic functional block diagram showing a receiving apparatus;
Fig. 5 is a functional block diagram showing a measurement unit of the receiving apparatus;
Fig. 6 is a diagram showing a manner for extracting pilot signals;
Fig. 7 is a flowchart of an operation example performed in the measurement unit of the receiving apparatus;
Fig. 8 is an explanatory diagram showing flow of signal processing;
Fig. 9 is a diagram showing a second division signal including one delay wave; and
Fig. 10 is a diagram showing a second division signal including two delay waves.

EMBODIMENTS FOR CARRYING OUT THE INVENTION

As mentioned above, when the pilot signals are transmitted discontinuously in the time direction and in the frequency direction in the LTE scheme and the like, propagation paths between of individual pilot signals cannot necessarily be regarded as the same. When delay wave is outstanding in a multipath propagation environment and when moving speed is large, correlation between pilot signals becomes low so that it becomes difficult to accurately estimate desired signal and interference signal received powers. This is because "$\alpha S_n$" and "$\beta S_{n+1}$" become remarkably different. The embodiment of the present invention realizes accurate estimation of downlink received power even when pilot signals are distributed discontinuously and two-dimensionally.

(1) When a communication apparatus moves at a high speed, time variation of a radio channel becomes large, so that correlation between signals received in different times becomes small. In the present embodiment, many subcarrier signal components that are derived from signals received at the same time are used in order to increase correlation between signals used fro calculation of reception quality.
(2) In a multipath propagation environment, there is a fear that correlation between subcarrier signal components in the frequency direction decreases due to existence of delay wave. In the present embodiment, signals of the frequency domain are transformed into signals of the time domain by IFFT, the time window is divided into a plurality of division windows, so that a time domain signal (division signal) is prepared for each division window. Reception quality and the like is calculated for each division signal, and the calculation results are summed, so that reception quality over the whole time window is derived accurately. The reason is that each division signal ideally includes only one delay wave. Accordingly, deterioration of correlation between subcarrier signal components due to delay wave can be effectively addressed.
(3) When calculating reception quality for each division window, each division signal corresponding to a division window is transformed into many subcarrier signal components of the frequency domain. A constant phase difference occurs between adjacent subcarrier signal components irrespective of the position of subcarrier. The phase difference $\theta$ is an amount derived from a timing n' at which delay wave included in a division window exists. In the present embodiment, an interference signal power ISSI=$\lambda_2$' is calculated while compensating for the phase difference, a desired signal power RSCP is calculated, and reception quality SIR=RSCP/ISSI is calculated.
Accordingly, reception quality of pilot signals can be accurately estimated even when the pilot signals are mapped discontinuously in the time direction and in the frequency direction.

According to an embodiment of the present invention, a receiving apparatus for calculating downlink received power by using a plurality of pilot signals transmitted from a base station is used. The receiving apparatus includes a Fourier transform unit configured to perform Fourier transform on a received signal, and a pilot signal extraction unit configured to extract pilot signals from the received signal after Fourier transform. The receiving apparatus further includes a calculation unit configured to perform phase correction on each extracted pilot signal and to calculate an interference signal received power.

According to an embodiment of the present invention, a receiving apparatus for calculating downlink received power by using a plurality of pilot signals transmitted from a base station is used. The receiving apparatus includes a Fourier transform unit configured to perform Fourier transform on a received signal, a pilot signal extraction unit configured to extract pilot signals from the received signal after Fourier transform, an inverse Fourier transform unit configured to perform inverse Fourier transform on extracted pilot signals to transform the pilot signals into time domain signals, a division signal generation unit configured to generate a division signal by extracting a part of the time domain signals, and a Fourier transform unit configured to perform Fourier transform on the division signal. The interference signal has statistical characteristics like AWGN (Additive White Gaussian Noise). The interference signal power ISSI is calculated while phase correction ($r_{i+1}'=r_{i+1}/e^{j\theta}$) is performed on many subcarrier signal components derived from the division signal. Further, the desired signal power RSCP is calculated by using the calculated interference signal power.

The embodiment of the present invention is described based on the following aspects.

1. Mobile communication system
2. Receiving apparatus
3. Details of measurement unit
4. Outline of operation
5. Phase correction
6. Interference signal power

[Embodiment 1]

<1. Mobile communication system>

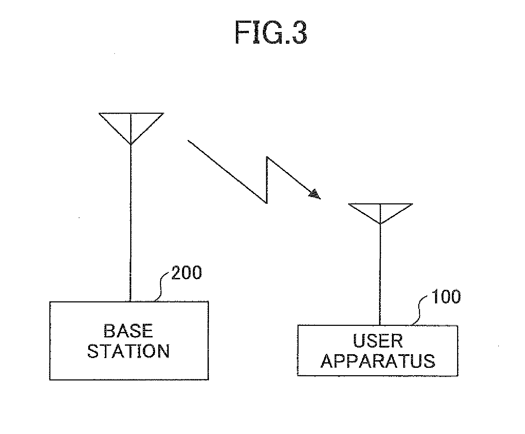

Fig. 3 shows an outline of a mobile communication system. The mobile communication system includes a user apparatus 100 and a base station 200. In the mobile communication system, the OFDM scheme is used at least in the downlink. For the sake of ease of explanation, it is assumed that the receiving apparatus 100 is included in the user apparatus 100. However, the present invention may be used for any proper apparatus for receiving a signal transmitted by the OFDM scheme. The user apparatus is a mobile station typically, but it may be a fixed station.

The receiving apparatus 100 obtains reception quality of the downlink based on pilot signals included in a downlink signal transmitted by the base station 200. The reception quality is derived from a desired signal power and an interference signal power in the downlink. In the present embodiment, the reception quality is a desired signal power to interference signal power ratio (SIR). The wording of "reception quality" may be used synonymously with "reception level". The reception quality may be represented by reception electrical field intensity, SIR, SINR, $Eb/N_0$, SNR or any other proper amount that is known in the present technical field.

The receiving apparatus 100 of the present embodiment estimates the desired signal power and the interference signal power in the downlink using the pilot signals. As an example, a system to which Evolved UTRA and UTRAN (another name: Long Term Evolution or Super 3G) is applied is assumed. Therefore, the pilot signals are mapped discontinuously to the time axis and the frequency axis to be transmitted.

<2. Receiving apparatus>

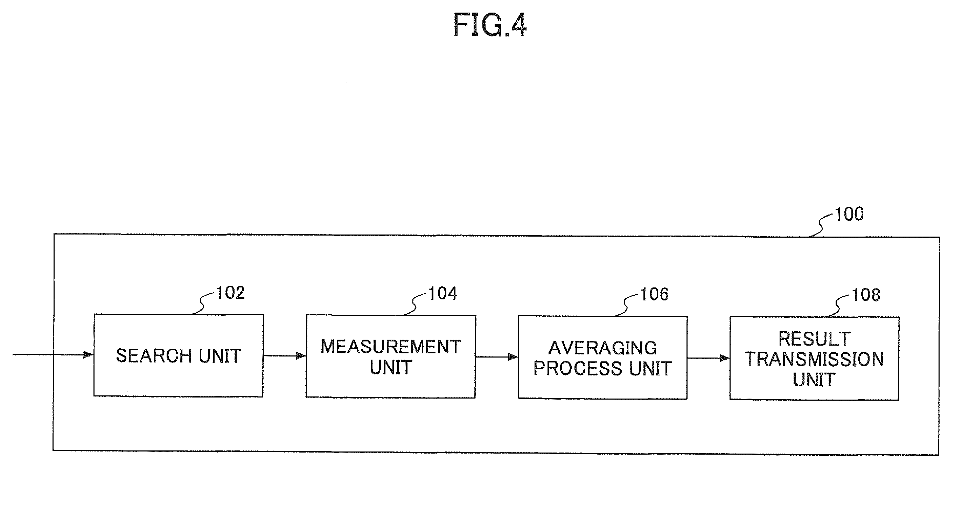

Fig. 4 shows an outline of the receiving apparatus 100. Fig. 4 shows a search unit 102, a measurement unit 104, an averaging process unit 106 and a result transmission unit 108.

The search unit 102 is configured to search a synchronization channel (SCH) transmitted from each base station, and to synchronize with each base station based on the SCH signal. Although not essential, the base station 200 maps the synchronization channel SCH to a predetermined bandwidth near the center part of the transmission frequency band of the base station, and transmits the synchronization channel mapped in that way. The search unit 102 receives the synchronization channel mapped to the frequency band of the center part of the transmission frequency band of the base station.

The measurement unit 104 extracts the pilot signals from the received signal transmitted from the base station 200 after synchronization between the receiving apparatus 100 and the base station is established, and estimates the desired signal power and the interference signal power based on the extracted pilot signals. Details of the method of estimation are described later.

The averaging process unit 106 is configured to calculate a desired signal power to interference signal power ratio in the downlink by using the desired signal power and the interference signal power of the pilot signals measured by the measurement unit 104. In this case, the averaging process unit 106 may determine whether the desired signal power to interference signal power ratio SIR is equal to or greater than a threshold. As described later, the desired signal power, the interference signal power and/or SIR is calculated for each division window that is a part of a period of N FFT points. It is assumed that a desired signal power to interference signal power ratio for an i-th division window is SIRi. The averaging process unit 106 obtains the ratio of desired signal power RSCPi to the interference signal power ISSIi for each of division windows, so as to calculate SIRi per a division window, and to compare it with a threshold. Then, the averaging process unit 106 calculates a ratio between a total sum of individual desired signal powers RSCPi and a total sum of individual interference signal powers ISSIi for causing SIRi equal to or greater than the threshold, so as to calculate the whole SIR.

The result transmission unit 108 is configured to report, to the user, the calculation result of the desired signal to interference signal power ratio in the downlink calculated by the averaging process unit 106. For example, the result transmission unit 108 may output the calculation result to a monitor. Also, the result transmission unit 108 may store the calculation result in a storage device inside the receiving apparatus 100, or may store the calculation result in a storage device outside the receiving apparatus 100. Also, the result transmission unit 108 may store the calculation result in a storage medium inside the receiving apparatus 100, or may store the calculation result in a storage medium outside the receiving apparatus 100.

<3. Details of the measurement unit>

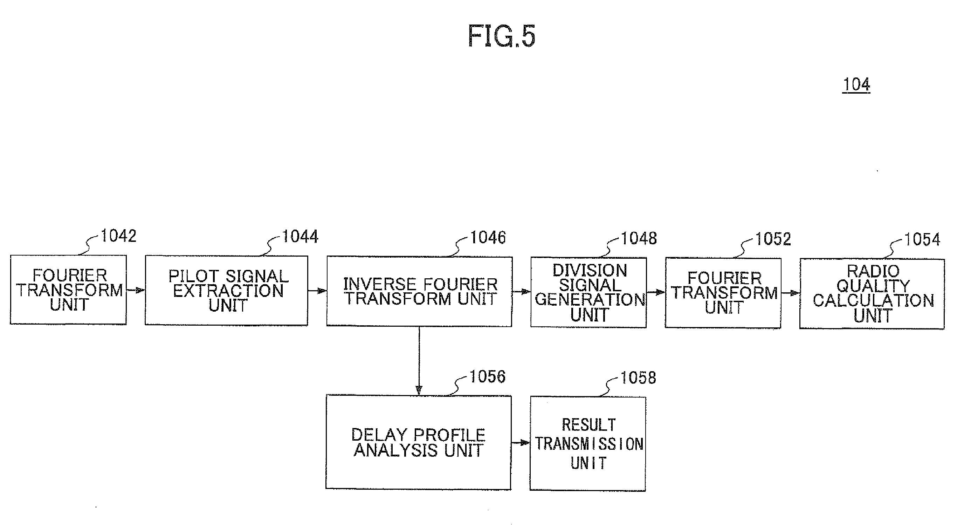

Fig. 5 shows the details of the measurement unit 104. Fig. 5 shows a Fourier transform unit 1042, a pilot signal extraction unit 1044, an inverse Fourier transform unit 1046, a division signal extraction unit 1048, a Fourier transform unit 1052, a radio quality calculation unit 1054, a delay profile analysis unit 1056 and a result transmission unit 1058.

The Fourier transform unit 1042 generates a signal in the frequency domain by performing fast Fourier transform (FFT) on the downlink signal received by the receiving apparatus 100. Since the downlink signal has been modulated by the OFDM scheme, signal components mapped to each subcarrier can be extracted by performing Fourier transform on the received signal.

The pilot signal extraction unit 1044 extracts pilot signals from the signal of the frequency domain generated by the Fourier transform unit 1042. Since the mobile communication system of the LTE scheme is used in the present embodiment, the receiving apparatus already knows how the pilot signals are mapped in each subframe. For example, as shown in Fig. 2, the pilot signals are mapped discontinuously on a two-dimensional plane having the time axis and the frequency axis. The pilot signal extraction unit 1044 extracts the pilot signals, and rearranges the extracted pilot signals in the frequency direction based on a known mapping rule.

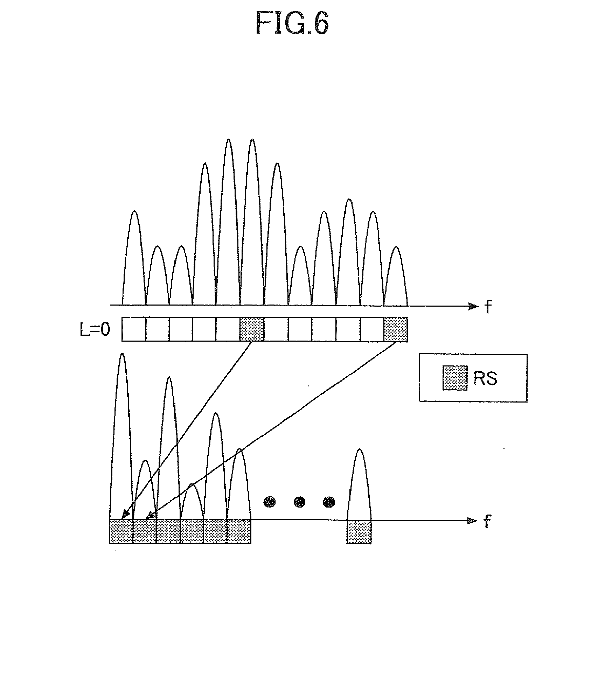

Fig. 6 shows a manner in which pilot signals are extracted. It is assumed that the pilot signals are mapped and transmitted like the manner shown in Fig. 2. In the receiving apparatus, pilot signals included in an OFDM symbol specified by L=0 are extracted from the received signal, and rearranged as indicated by arrows.

The inverse Fourier transform unit 1046 shown in Fig. 5 performs inverse fast Fourier transform (IFFT) on pilot signals rearranged on the frequency axis to generate signals of the time domain. In the present embodiment, the IFFT point number in IFFT is the same as the FFT point number of the Fourier transform unit 1042. For the sake of convenience of explanation, the IFFT/FFT point number is referred to as "FFT point number" or "first time window". As an example, the FFT point number N may be a value of 1024, 2048 or the like. Therefore, signals over a period (period corresponding to N) of the first time window is generated by the inverse Fourier transform unit 1046. The inverse Fourier transform unit 1046 supplies the generated signals of the time domain to the division signal generation unit 1048 and to the delay profile analysis unit 1056.

The division signal generation unit 1048 generates a plurality ($N_0$) of division signals from the time domain signals generated by the inverse Fourier transform unit 1046. In this case, a first time window (N points) are divided into No division windows. Each of the division signal is a signal over the period (N points) of the first time window, and includes a series of time samples ($N/N_0$) in a corresponding division window, but does not include time samples of another division window. For example, it is assumed that N=2048, $N_0$=64, $N/N_0$=32. Each of the number of division signals and the number of division windows is 64. A first division signal includes a series of 32 time samples in a period corresponding to the first division window. In periods corresponding to other division windows, the first division signal takes a value of 0. A second division signal includes a series of 32 time samples in a period corresponding to the second division window. In periods corresponding to other division windows, the second division signal takes a value of 0. For other division windows, similar processing is performed, so that $N_0$ division signals are generated.

The division window may be also referred to as "second time window". Each of the division windows includes $N/N_0$ points (samples). As an example, $N/N_0$ may take a numerical value of 16, 32 or the like. In the case of the present invention, each of the FFT point number N and the division number $N_0$ may take any proper value. But, when using FFT, it is necessary that each of the FFT point number N and the value of $N/N_0$ is a power of 2 ($2^n$). When using DET, there is not such a limitation. The present invention can use not only FFT but also DFT. From the viewpoint of shortening the processing time, it is preferable to use FFT. In addition, the size of the second time window is less than the size of the first time window, at least. The size of the second time window can be appropriately changed according to design specifications and use environments. For example, the size of the second time window may be determined based on an average interval between delay paths in the after-mentioned delay profile. Accordingly, it can be effectively suppressed that each division signal includes many delay signals.

The Fourier transform unit 1052 performs fast Fourier transform (FFT) on the $N_0$ division signals generated by the division signal generation unit 1048 to generate $N_0$ signals of the frequency domain. The fast Fourier transform is performed for each division signal. Therefore, the signal of the frequency domain generated for each division signal occupies a bandwidth of N points. If the division window is short enough, a delay wave is hard to be mixed in the division window. Thus, the signal of the frequency domain derived from the division signal corresponding to each division window includes only 1 path component. Therefore, individual subcarrier components in the signal of the frequency domain become signal components having high correlation.

The radio quality calculation unit 1054 calculates the reception quality of the pilot signals based on the signal of the frequency domain generated by the Fourier transform unit 1052. Although the reception quality is derived from the desired signal power and the interference signal power, the reception quality may be represented as any proper amount known in this technical field. How the reception quality of the pilot signals is calculated is described later.

The delay profile analysis unit 1056 receives the signal of the time domain from the inverse Fourier transform unit 1046 to analyze delay profile on the pilot signals. For example, the delay profile analysis unit 1056 may check delay time of path, average period between paths, power level of path, delay time from the maximum path, and received power difference from the maximum path. The delay profile analysis unit 1056 supplies information on the delay profile of the pilot signals to the result transmission unit 1058.

The result transmission unit 1058 is configured to report, to a user, the analysis result of the delay profile analysis unit 1056. For example, the result transmission unit 1058 may output the delay profile to a monitor. Also, the result transmission unit 1058 may store the sample of the delay wave in a storage device or a storage medium of the receiving apparatus 100, and may store the sample of the delay wave in a storage device or a storage medium outside the receiving apparatus 100.

<4. Outline of operation>

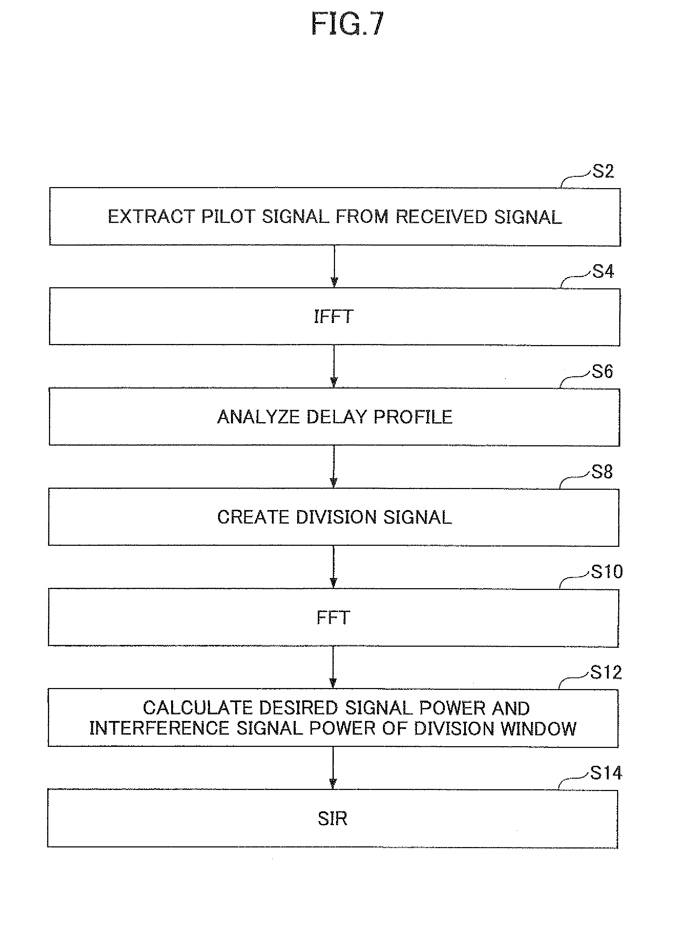

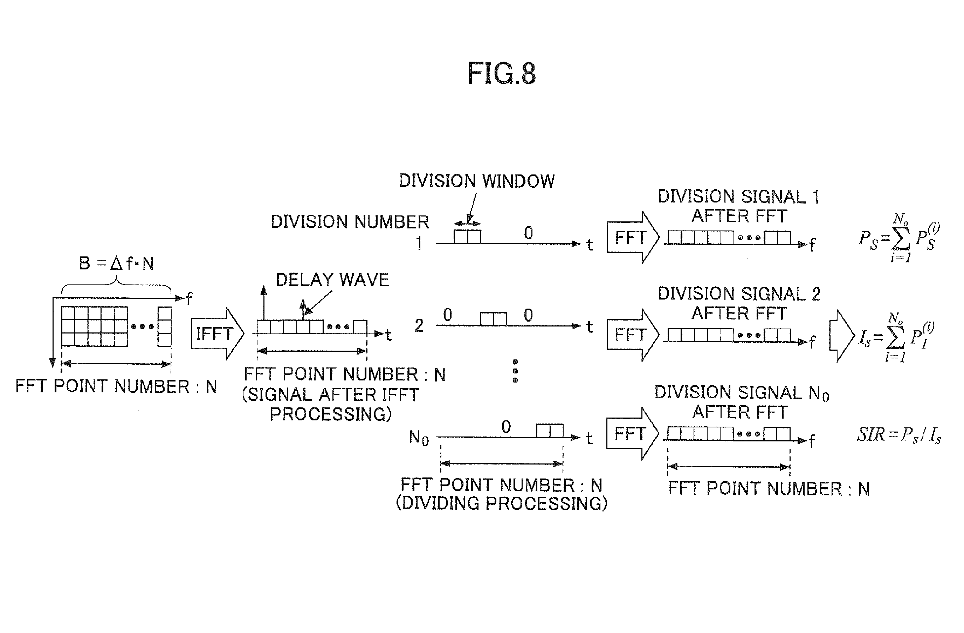

In the following, operation of the measurement unit (Fig. 5) shown in Fig. 4 is described with reference to Figs. 7 and 8. Fig. 7 shows a flowchart showing an operation example. Fig. 8 is a diagram for describing the flow of signal processing.

In step S2, the receiving apparatus receives a radio signal, and extracts pilot signals from the received signal. Extraction of the pilot signals is performed mainly by the pilot signal extraction unit 1044. More specifically, since the downlink signal is modulated by the OFDM scheme, fast Fourier transform (FFT) is performed on the received signal so that signal component mapped to each subcarrier can be derived. Then, the pilot signals are extracted from the signal of the frequency domain on which the fast Fourier transform (FFT) has been performed. The extracted pilot signals are arranged in the frequency direction.

In step S4, inverse fast Fourier transform (IFFT) processing is performed on the pilot signals of the frequency domain in a same time derived by the fast Fourier transform (FFT). The IFFT processing is performed mainly by the inverse Fourier transform unit 1046 shown in Fig. 5.

In step S6, delay profile of the pilot signals is analyzed based on the pilot signals of the time domain on which IFFT processing has been performed. Analysis of delay profile is mainly performed by the delay profile analysis unit 1056 shown in Fig. 5.

In step S8, division signals are prepared. For the sake of convenience of explanation, it is assumed that No division signals are generated from the pilot signals of the time domain. As mentioned above, the period (first time window) over N FFT points is divided into $N_0$ division windows. Each of the division signal is a signal over the period of N FFT points, and includes a series of time samples in a corresponding division window, but does not include time samples of another division window (refer to Fig. 8) For example, it is assumed that $N=2048$, $N_0=64$, $N/N_0=32$. Each of the number of division signals and the number of division windows is 64. A first division signal includes a series of 32 time samples in a period corresponding to the first division window. In periods corresponding to other division windows, the first division signal takes a value of 0. A second division signal includes a series of 32 time samples in a period corresponding to the second division window. In periods corresponding to other division windows, the second division signal takes a value of 0. For other division windows, similar processing is performed, so that $N_0$ division signals are generated. Creation of division signals is mainly performed by the division signal generation unit 1048 shown in Fig. 5.

In step S10, processing of fast Fourier transform (FFT) is performed for each division signal. Since one division signal corresponds to one division window, the signal of the frequency domain after fast Fourier transform is provided for each division window. The FFT processing is mainly performed by the Fourier transform unit 1052 shown in Fig. 5.

In step S12, a desired signal power and an interference signal power and the like are calculated using the signals of the frequency domain after FFT processing. In this case, a phase of the subcarrier signal components is corrected, so that the desired signal power and the interference signal power are calculated using the signal component in which the phase has been corrected. Phase correction of the subcarrier signal component is described later.

In step S14, the reception quality (SIR) on the whole time window is calculated based on the total sum of the desired signal power and the interference signal power of each division window.

<5. Phase correction>

As mentioned above, each of the division signal generated in step S8 is a signal over the period of the FFT point number N, and includes a series of time samples in a corresponding division window, but does not include time samples of another division window. For example, a second division signal includes a series of time samples of the second division window. In points corresponding to first, third and later division windows, 0 is inserted. Therefore, even though each division signal includes only one path signal components, the position of the path is not the head of the N points. As to a division signal corresponding to the first division window, the position of the path may be set to the head. However, in the case of division windows after the second one, the position of the path cannot be the head. The reason is that 0 is inserted in at least a position corresponding to the first division window.

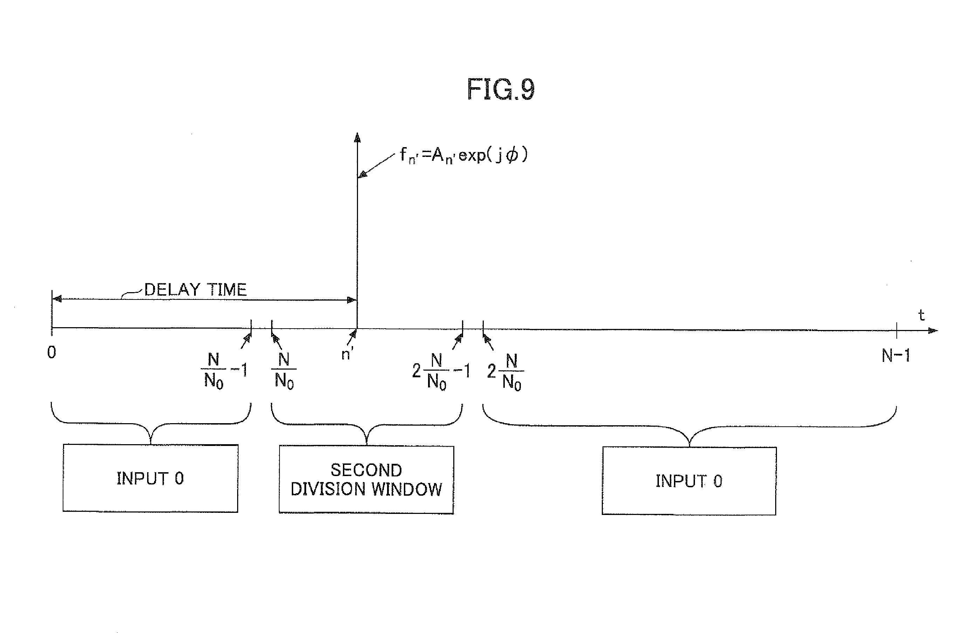

Fig. 9 shows a second division signal corresponding to a second division window. N indicates the number of FFT points. No indicates the number of division windows (division signal number). In the example shown in the figure, one path is shown at a position of n'. As shown in the figure, if Fourier transform (DFT) is performed on the path delayed in terms of time, a phase rotation occurs between transformed subcarrier signal components, which results from characteristics of the discrete Fourier transform (DFT). Therefore, in order to accurately calculate interference signal power and the like for each division window, it is necessary to correct the phase rotation.

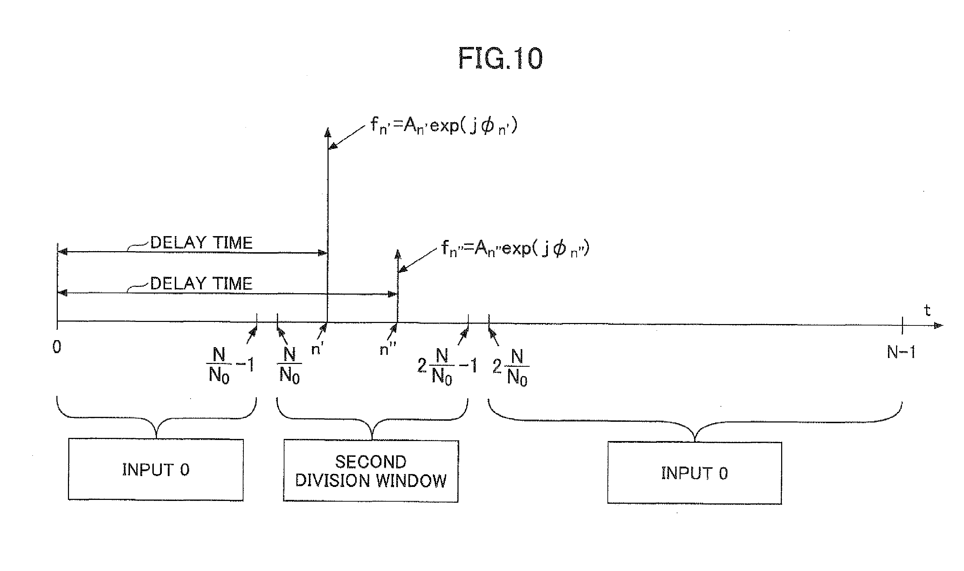

For ease of explanation, it is assumed that only one path exists in each division window. That is, it is assumed that the number of delay wave is only one in any division window. By increasing the division number No, it can be avoided that a plurality of delay waves exist in one division window. As shown in Fig. 10, even if two waves exist in one division window, if one of them is dominant, the two waves may be approximated to the dominant one, or, an average one of a plurality delay waves may be used.

When performing discrete Fourier transform on the time domain signal delayed from the head position, each frequency component (subcarrier signal component) $r_i$ can be represented by the following equation.

$$r_i = \sum_{n=0}^{N-1} f_n w^{ni}, \quad w = e^{-2\pi j/N}$$

In the equation, N indicates the number of points of DFT, and $f_n$ indicates an impulse (path) of the time domain of the pilot signal. $f_n$ is defined as follows.

$$f_n = \begin{cases} Ae^{j\phi} & (n = n') \\ 0 & (n \neq n') \end{cases}$$

In the equation, A and $\varphi$ represent an amplitude and a phase of a delay wave respectively. n' indicates a position of the impulse on the delay time of the delay wave, and is represented as an integer counted from the head position 0 (Fig. 9). Using the definition of $f_n$, each subcarrier signal component $r_i$ after discrete Fourier transform is represented as the following equation.

$$r_i = f_{n'} \cdot W^{n'i} = Ae^{j\phi} \cdot W^{n'i}$$

Assuming that $W^{n'} = e^{j\theta}$ and $\theta = -2\pi n'/N$, an i-th subcarrier signal component $r_i$ after discrete Fourier transform is represented as the following equation.

$$r_i = Ae^{j\phi} \cdot e^{j\theta i} = Ae^{j(\phi + \theta i)}$$

An (i+1)-th subcarrier signal component $r_{i+1}$ is represented as the following equation.

$$r_{i+1} = Ae^{j\phi} \cdot e^{j\theta(i+1)} = Ae^{j(\phi + \theta i + \theta)}$$

Therefore, phase difference between adjacent subcarrier signal components becomes $r_{i+1}/r_i=e^{j\theta}$. Since $e^{j\theta}$ does not depend on i, phase difference between adjacent subcarrier signal components is a constant value ($e^{j\theta}$) for every subcarrier signal component. Also, since $\theta=-2nn'/N$, $\theta$ depends on n'. That is, $\theta$ is an amount depending on n' corresponding to delay time of delay wave. The value of n' corresponding to delay time is different for each division window (for each division signal). Therefore, simplification of calculation may be attempted by using an average of $N_0-1$ phase differences $\theta$ obtained for each division signal.

In the present embodiment, a first value $\lambda_1$ and a second value $\lambda_2$ are calculated represented as the following equations.

$$\lambda_1 = \frac{1}{2N_s}\sum_{i=1}^{Ns}\left|r_i + r_{i+1}/e^{j\theta}\right|^2 \qquad \cdots(A1)$$

$$\lambda_2 = \frac{1}{2N_s}\sum_{i=1}^{Ns}\left|r_i - r_{i+1}/e^{j\theta}\right|^2 \qquad \cdots(A2)$$

These relate to processing in which the phase difference $e^{j\theta}$ is considered for $\lambda_1$, $\lambda_2$ referred in the equations (1) and (2) in the background art. That is, calculation may be performed by using $r_{i+1}//e^{j\theta}$ instead of the (i+1)-th subcarrier signal component $r_{i+1}$. $\lambda_1$ and $h_2$ in the equations (1) and (2) in the background art are a first proper value and a second proper value of a cross-correlation matrix for the two signals $r_n$ and $r_{n+1}$ respectively. Although $r_n$, $r_{n+1}$ in the equations (1) and (2) in the background art are time samples of signals received continuously in terms of time, $r_i$, $r_i+_1$ in the equations (A1) and (A2) are adjacent subcarrier signal components in the frequency domain in which the subcarrier signal components are obtained by performing FFT processing on signals received simultaneously. Ns indicates the number of sets of $r_i$ and $r_{i+1}$.

The desired signal power RSCP is represented by the following equation.

$$\text{RSCP}=1/2\,|\lambda_1-\text{ISSI}\,|$$

In the equation, ISSI indicates an interference signal power. According to the equation (4) of the background art, $\lambda_2$ indicates an interference signal power as it is. However, as mentioned later, considering the phase difference $\theta$, the interference signal power ISSI is not equal to $\lambda_2$.

In the following, a calculation method of the interference signal power is described.

<6. Interference signal power>

It is assumed that the interference signal is additive white gaussian noise (AWGN), and that the time window includes No division windows. Also, focusing on one division window, it is assumed that this window includes AWGN and that any other division window does not include any signal (0 is input). It is assumed that the number of FFT samples of the whole time window is N, and that the number of samples of the division window is L. In other words, AWGN exists over L samples. Such an interference signal can be represented by the following equation.

$$f_n = \begin{cases} A_n e^{j\phi_n} & (m \le n \le m+L-1) \\ 0 & (n < m \quad or \quad n > m+L-1) \end{cases}$$

In the equation, An indicates an amplitude of random Rayleigh distribution, and $\varphi_n$ indicates a variable uniformly distributed within a range of 0 ~ 2n(rad). m indicates a number of the head sample of a division window. If the head of the time window is 0, m tales values of 0,L,2L,... since the number of points occupied by one division window is L. When discrete Fourier transform (DFT) is performed on the signal (AWGN) of the time domain represented by the equation, the subcarrier component $r_i$ after the DFT processing is represented by the following equation.

$$r_i = \sum_{n=m}^{m+L-1} f_n e^{-jn\varphi i}$$

$$= A_m e^{j(\phi_m + m\varphi i)} + A_{m+1} e^{j(\phi_{m+1} + (m+1)\varphi i)} \cdots + A_{m+L-1} e^{j(\phi_{m+L-1} + (m+L-1)\varphi i)}$$

If the phase of the (i+1)-th subcarrier signal component is corrected by the amount of $e^{j\theta}$, the corrected subcarrier signal component $r_{i+1}'$ is represented as the following equation.

$$r'_{i+1} = A_m e^{j(\phi_m + m\varphi(i+1) - \theta)} + A_{m+1} e^{j(\phi_{m+1} + (m+1)\varphi(i+1) - \theta)}$$

$$\cdots + A_{m+L-1} e^{j(\phi_{m+L-1} + (m+L-1)\varphi(i+1) - \theta)}$$

in which $\psi = -2n/N$. When the value of $\lambda_2$ is calculated based on these equations, $\lambda_2$ is represented as the following equation.

$$\lambda_2 = |r'_{i+1} - r_i|^2 / 2 = \left\{ <r'_{i+1} r'^{*}_{i+1}> + <r_i r_i^*> - <r_i r'^{*}_{i+1} + r'_{i+1} r_i^*> \right\} / 2$$

In the equation, $<\cdot>$ indicates ensemble mean, and $*$ indicates complex conjugate. Regarding the first and the second ensemble mean, considering characteristics of AWGN,

$$<r_{i+1}' \, r_{i+1}^{*\prime}> = <r_i' \, r_i^{*\prime}> = A_m^2 + A_{m+1}^2 + \cdots + A_{m+L-1}^2 = LA^2 \text{ holds}$$

true, in which A indicates ensemble mean of $A_n$.

On the other hand, the third ensemble mean in the right side can be represented as follows considering the characteristics of AWGN.

$$<r_i r'^{*}_{i+1} + r'_{i+1} r_i^*> = 2A^2 \sum_{i=0}^{L-1} \cos\{\varphi(m+i) - \theta\}$$

Therefore, $\lambda_2$ can be finally represented as follows.

$$\lambda_2 = LA^2 - A^2 \sum_{i=0}^{L-1} \cos\{\varphi(m+i) - \theta\} = A^2 \left[ L - \sum_{i=0}^{L-1} \cos\{\varphi(m+i) - \theta\} \right]$$

By the way, assuming that the interference signal power of the whole time window is $P_I$, $A^2$ that corresponds to interference signal power per one point can be represented as $A^2 = P_I/N$. The following equation holds true between interference signal power $\lambda_2'$ of the whole division window and the interference signal power $P_I$ of the whole time window.

$$\lambda_2' = P_I \times (L/N)$$

Therefore, interference signal power $\lambda_2$' of the whole division window can be represented as the following equation.

$$\lambda'_2 = \lambda_2 / \left[ 1 - (1/L) \sum_{i=0}^{L-1} \cos\{\varphi(m+i) - \theta\} \right]$$

Therefore, by calculating $\lambda_2$ based on the equation (A2) and calculating the above-mentioned $\lambda_2$', the interference signal power $\lambda_2$'=ISSI per a division window is calculated. Based on the equation (A1), $\lambda_1$ is calculated, and desired signal power RSCP=1/2$|\lambda_1$-ISSI| per one division window is calculated. Further, by calculating RSCP/ISSI, a quality SIR per division window is calculated. SIR of the whole time window is derived by calculating a ratio between a total sum of the desired signal powers RSCP per division window and a total sum of interference signal powers ISSI per time window ((SIR of the whole time window)=(total sum of RSCP)/(total sum of ISSI)).

INDUSTRIAL APPLICABILITY

The present invention may be applied to any proper communication system (LTE system, for example) that uses the OFDM scheme.

Although the present invention has been described with reference to specific embodiments, these embodiments are simply illustrative, and various variations, modifications, alterations, substitutions and so on could be conceived by those skilled in the art. The present invention has been described using specific numerals in order to facilitate understandings of the present invention, but unless specifically stated otherwise, these numerals are simply illustrative, and any other appropriate value may be used. The present invention has been described using specific equations in order to facilitate understandings of the present invention, but unless specifically stated otherwise, these equations are simply illustrative, and any other appropriate equations may be used. Classification into each embodiment or each item is not essential in the present invention, and matters described in equal to or more than two embodiments or items may be combined and used as necessary. Also, a matter described in an embodiment or item may be applied to another matter described in another embodiment or item unless they are contradictory. For convenience, apparatuses according to the embodiments of the present invention have been described with reference to functional block diagrams, but the apparatuses may be implemented in hardware, software or combinations thereof. The software may be stored in a storage medium of arbitrary types such as a RAM (Random Access Memory), a flash memory, a ROM (Read Only Memory), an EPROM(Erasable Programmable ROM), an EEPROM(Electronically Erasable and Programmable ROM), a register, a hard disk (HDD), a removable disk and a CD-ROM. The present invention is not limited to the above-mentioned embodiment and is intended to include various variations, modifications, alterations, substitutions and so on without departing from the spirit of the present invention.

The present international application claims priority based on Japanese patent application No. 2009-005243, filed in the JPO on January 13, 2009, and the entire contents of the Japanese patent application No. 2009-005243 are incorporated herein by reference.

LIST OF REFERENCE SYMBOLS

| | |
|---|---|
| 100 | receiving apparatus |
| 102 | search unit |
| 104 | measurement unit |
| 106 | averaging process unit |
| 108 | result transmission unit |
| 1042 | Fourier transform unit |
| 1044 | pilot signal extraction unit |
| 1046 | inverse Fourier transform unit |
| 1048 | division signal generation unit |
| 1052 | Fourier transform unit |
| 1054 | radio quality calculation unit |
| 1056 | delay profile analysis unit |
| 1058 | result transmission unit |

**Claims**

1. A radio quality measurement apparatus comprising:

   an extraction unit configured to extract pilot signals from a received signal on which Fourier transform has been performed, and to derive a FFT point number of time samples from the extracted pilot signals;
   a dividing unit configured to generate a plurality of division signals from the FFT point number of time samples, wherein a time window including the FFT point number of time samples includes a plurality of division windows, and each of the plurality of division signals includes a series of time samples in a corresponding division window;
   a transform unit configured to perform Fourier transform on each of the plurality of division signals;
   a quality calculation unit configured to obtain a phase deviation amount between subcarrier signal components in the division signal on which Fourier transform has been performed, and an interference signal power per division window, so as to calculate a reception quality of the pilot signals,
   wherein the phase deviation amount is derived according to a time sample position of a delay path of the pilot signals,
   a phase difference between the subcarrier signal components is corrected by the phase deviation amount, and the interference signal power and the reception quality are calculated based on a first value $\lambda_1$ and a second value $\lambda_2$ that are respectively derived from ensemble mean of sum signal strength and difference signal strength of corrected two subcarrier signal components.

2. The radio quality measurement apparatus as claimed in claim 1, wherein the desired signal power is calculated from a difference between the first value and the interference signal power.

3. The radio quality measurement apparatus as claimed in claim 1, wherein the phase deviation amount is derived according to an average time sample position of the delay path of the pilot signals.

4. The radio quality measurement apparatus as claimed in claim 1, wherein the interference signal power is calculated by dividing the second value $\lambda_2$ by

$$1 - \frac{1}{L} \sum_{i=0}^{L-1} \cos\{\varphi(m+i) - \theta\}$$

   wherein $\theta$ indicates the phase deviation amount, L indicates the number of samples of a division window, and m indicates a head position of each division window, $\psi$ is defined as $-2\pi/N$, and N indicates the FFT point number.

5. A radio quality measurement method comprising:

   an extraction of extracting pilot signals from a received signal on which Fourier transform has been performed, and deriving a FFT point number of time samples from the extracted pilot signals;
   a dividing of generating a plurality of division signals from the FFT point number of time samples, wherein a time window including the FFT point number of time samples includes a plurality of division windows, and each of the plurality of division signals includes a series of time samples in a corresponding division window;
   a transform step of performing Fourier transform on each of the plurality of division signals;
   a quality calculation step of obtaining a phase deviation amount between subcarrier signal components in the division signal on which Fourier transform has been performed, and an interference signal power per division window, so as to calculate a reception quality of the pilot signals,
   wherein the phase deviation amount is derived according to a time sample position of a delay path of the pilot signals,
   a phase difference between the subcarrier signal components is corrected by the phase deviation amount, and the interference signal power and the reception quality are calculated based on a first value $\lambda_1$ and a second value $\lambda_2$ that are respectively derived from ensemble mean of sum signal strength and difference signal strength of corrected two subcarrier signal components.

6. The radio quality measurement method as claimed in claim 5, wherein the desired signal power is calculated from a difference between the first value and the interference signal power.

7. The radio quality measurement method as claimed in claim 5, wherein the phase deviation amount is derived according to an average time sample position of the delay path of the pilot signals.

8. The radio quality measurement method as claimed in claim 5, wherein the interference signal power is calculated by dividing the second value $\lambda_2$ by

$$ 1 - \frac{1}{L} \sum_{i=0}^{L-1} \cos\{\varphi(m+i) - \theta\} $$

wherein $\theta$ indicates the phase deviation amount, L indicates the number of samples of a division window, and m indicates a head position of each division window, $\psi$ is defined as $-2\pi/N$, and N indicates the FFT point number.

# FIG.1

W-CDMA SIGNAL AFTER DESPREADING

W-CDMA SIGNAL BEFORE DESPREADING

f

S1

S2

CORRELATION BETWEEN SYMBOLS IS HIGH

t

EP 2 381 603 A1

# FIG.2

: REFERENCE SIGNAL

# FIG.3

# FIG.4

```
                    ┌─100
  ┌─────────────────────────────────────────────────────────────────────┐
  │   ┌─102        ┌─104          ┌─106            ┌─108                  │
  │ ┌──────────┐ ┌──────────────┐ ┌──────────────┐ ┌──────────────┐      │
→─┼→│ SEARCH   │→│ MEASUREMENT  │→│ AVERAGING    │→│ RESULT       │      │
  │ │ UNIT     │ │ UNIT         │ │ PROCESS UNIT │ │ TRANSMISSION │      │
  │ └──────────┘ └──────────────┘ └──────────────┘ │ UNIT         │      │
  │                                                 └──────────────┘      │
  └─────────────────────────────────────────────────────────────────────┘
```

EP 2 381 603 A1

# FIG.5

<u>104</u>

# FIG.6

L=0

RS

# FIG.7

S2

```
EXTRACT PILOT SIGNAL FROM RECEIVED SIGNAL
```

S4

```
IFFT
```

S6

```
ANALYZE DELAY PROFILE
```

S8

```
CREATE DIVISION SIGNAL
```

S10

```
FFT
```

S12

```
CALCULATE DESIRED SIGNAL POWER AND
INTERFERENCE SIGNAL POWER OF DIVISION WINDOW
```

S14

```
SIR
```

# FIG.8

DIVISION WINDOW

DIVISION NUMBER
1

DIVISION SIGNAL 1
AFTER FFT

FFT

$P_S = \sum_{i=1}^{N_o} P_S^{(i)}$

$B = \Delta f \cdot N$

DELAY WAVE

IFFT

FFT POINT NUMBER : N

FFT POINT NUMBER : N
(SIGNAL AFTER IFFT
PROCESSING)

2
0          0

DIVISION SIGNAL 2
AFTER FFT

FFT

$I_s = \sum_{i=1}^{N_o} P_I^{(i)}$

$N_0$
0

DIVISION SIGNAL $N_0$
AFTER FFT

FFT

$SIR = P_s / I_s$

FFT POINT NUMBER : N
(DIVIDING PROCESSING)

FFT POINT NUMBER : N

EP 2 381 603 A1

# FIG.9

EP 2 381 603 A1

# FIG.10

$f_{n'} = A_{n'} \exp(j\phi_{n'})$

DELAY TIME

$f_{n''} = A_{n''} \exp(j\phi_{n''})$

DELAY TIME

t

0

$\dfrac{N}{N_0} - 1$    $\dfrac{N}{N_0}$    n'    n''    $2\dfrac{N}{N_0} - 1$    $2\dfrac{N}{N_0}$    N−1

INPUT 0

SECOND DIVISION WINDOW

INPUT 0

EP 2 381 603 A1

## INTERNATIONAL SEARCH REPORT

International application No.

PCT/JP2010/050062

### A. CLASSIFICATION OF SUBJECT MATTER
*H04J11/00*(2006.01)i, *H04W24/10*(2009.01)i

According to International Patent Classification (IPC) or to both national classification and IPC

### B. FIELDS SEARCHED

Minimum documentation searched (classification system followed by classification symbols)
H04J11/00, H04W24/10

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| P,X | Mototsugu SUZUKI, Koshiro KITAO, Tetsuro IMAI, "OFDM System ni Okeru Multipath Kankyoka no Koseido SIR Sokuteiho no Kento", IEICE Technical Report, 14 January 2009 (14.01.2009), pages 91 to 96, A·P2008-165 | 1-8 |
| P,A | WO 2009/041542 A1 (Kyocera Corp.), 02 April 2009 (02.04.2009), entire text (Family: none) | 1-8 |
| A | JP 2004-266814 A (Mitsubishi Electric Corp.), 04 September 2004 (04.09.2004), entire text (Family: none) | 1-8 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 February, 2010 (09.02.10) | 23 February, 2010 (23.02.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2010/050062 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 4025336 B2  (Toshiba Corp.),<br>19 December 2007 (19.12.2007),<br>entire text<br>& JP 2007-13310 A | 1-8 |
| A | AHN, Chang-Jun; TAKAHASHI, Satoshi; HAEIWA,<br>Kazuhisa, Time-Frequency Interferometry for<br>OFDM, IEICE Technical Report, The Institute of<br>Electronics, Information and Communication<br>Engineers, 08 October 2007 (08.10.2007), pages<br>1 to 4, WBS2007-32 | 1-8 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009005243 A